(19) **Europäisches Patentamt / European Patent Office / Office européen des brevets**

(11) **EP 3 730 995 A1**

(12) **EUROPEAN PATENT APPLICATION**

(43) Date of publication:
**28.10.2020 Bulletin 2020/44**

(21) Application number: **19305536.5**

(22) Date of filing: **26.04.2019**

(51) Int Cl.:
**G02C 1/00** (2006.01)     **B29D 11/00** (2006.01)
**G02B 1/10** (2015.01)     **G02B 27/00** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ESSILOR INTERNATIONAL**
**94220 Charenton-Le-Pont (FR)**

(72) Inventors:
• **ANG, Ker Chin**
  **39346 Singapore (SG)**

• **DROBE, Bjorn**
  **39346 Singapore (SG)**
• **YU, Hui**
  **39346 Singapore (SG)**
• **KASTURE, Prakhar**
  **39346 Singapore (SG)**
• **BHANGALE, Sunil Madhukar**
  **39346 Singapore (SG)**

(74) Representative: **Jacobacci Coralis Harle**
**32, rue de l'Arcade**
**75008 Paris (FR)**

(54) **AN EYEWEAR AND METHOD OF MANUFACTURING AN EYEWEAR**

(57)     A method of manufacturing an eyewear is provided. The method may include providing an ophthalmic lens comprising a first optical surface, an opposing second optical surface, and an edge surface connecting the first optical surface and the second optical surface; determining one or more target colors relating to any one of a physical characteristic and a physical environment of a wearer of the eyewear; and disposing a first layer on the edge surface of the ophthalmic lens, wherein the first layer has a first color profile determined based on the one or more target colors. An eyewear is also provided.

**FIG. 9**

EP 3 730 995 A1

**Description**

**Technical Field**

The disclosure relates generally to eyewear comprising ophthalmic lenses having an edge coating, and methods of manufacturing eyewear comprising ophthalmic lenses having an edge coating.

**Background**

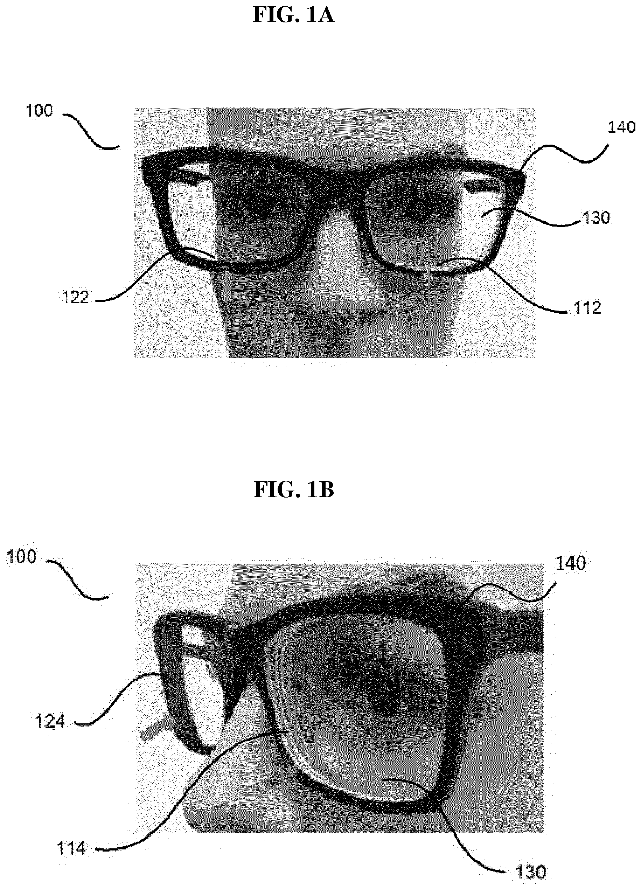

A coating material may be introduced on the edge of an ophthalmic lens as an edge coating for various reasons. For example, an opaque coating may be deposited on the edge of an ophthalmic lens to reduce visibility of myopia rings and white rings for aesthetic purposes. Examples of a white ring and a myopia ring are shown in **FIG. 1A** and **FIG. 1B** as 112 and 114, respectively. The myopia rings and white rings may result due to internal reflection of light through the ophthalmic lens. For effective reduction in visibility of the myopia rings and white rings, the edge coating should have good opacity, finishing, mechanical, and adhesion properties to allow masking of the myopia rings and white rings.

To this end, an operator may apply the coating material on the edge of an ophthalmic lens using a marker pen or a brush, or by spray coating. Ideally, the coating material is applied onto the edge surface of the ophthalmic lens only, without any of the coating material being coated on the optical surfaces of the ophthalmic lens. In applying the coating material, the white ring and the myopia ring may be masked so that they are less noticeable than before. The edge color is generally of a single color and chosen to match the frame color. Example of an edge surface of the ophthalmic lens having a coating material disposed thereon so as to mask the white ring and the myopia ring are shown in **FIG. 1A** and **FIG. 1B** as 122 and 124, respectively.

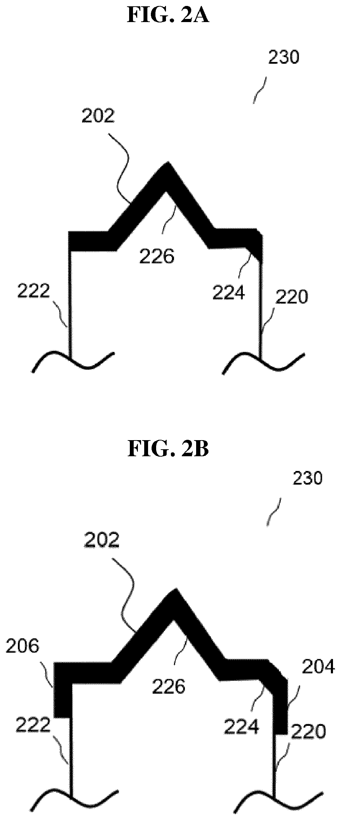

For illustration purposes, **FIG. 2A** is a schematic diagram showing an edge coating 202 disposed on an edge surface of an ophthalmic lens 230 according to an embodiment. The edge surface of the ophthalmic lens 230 is defined by the surface connecting the first optical surface 220 and the second optical surface 222. The edge surface of the ophthalmic lens 230 comprises a lens bevel 226 and a safety bevel 224. As depicted in the figure, there is no overflow on the first optical surface 220 and the second optical surface 222 of the ophthalmic lens 230.

Notwithstanding the above, the operator often finds himself or herself in a situation whereby he or she accidentally introduces some excess coating, otherwise termed herein as overflow, on the optical surfaces. This is depicted in **FIG. 2B,** which is a schematic diagram showing an edge coating 202 disposed on an edge surface of an ophthalmic lens 200. As shown in the figure, there is overflow in the form of excess coating material 204, 206 disposed respectively on the first optical surface 220 and the second optical surface 222 of the ophthalmic lens 200. These overflows are removed completely so as not to compromise aesthetics of the ophthalmic lens.

With ophthalmic lenses for wearers with lower myopia (within $\pm$ 2.00D), the methods mentioned above to disguise myopia rings and white rings generally lead to eyewear having better aesthetics. With ophthalmic lenses for wearers with higher myopia (beyond $\pm$ 2.00D) or with cylindrical lenses, however, the above-mentioned methods tend to make the frame appear thicker, particularly when the wearer is viewed at certain angles by a viewer.

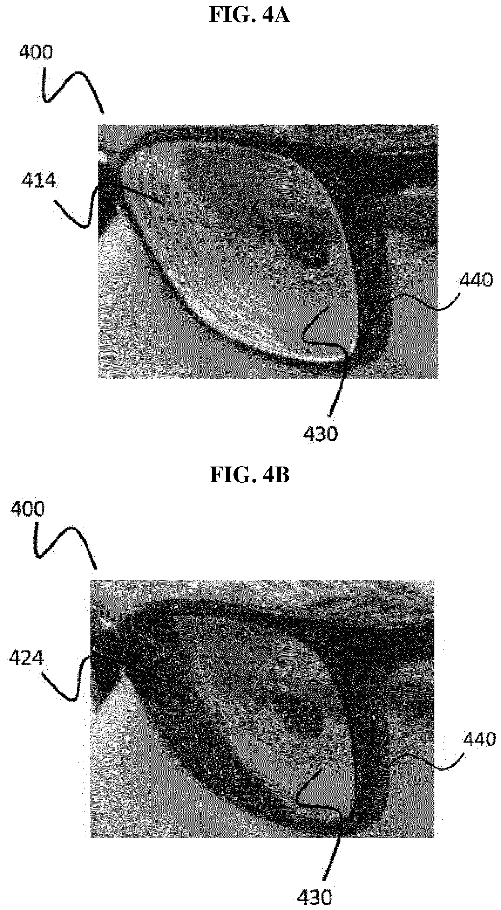

An example of this phenomenon is illustrated in **FIG. 4A** and **FIG. 4B** using -6.00D lenses. To mask the myopia ring 414 shown in **FIG. 4A,** edge surface of the ophthalmic lens 430 is coated with a coating material and shown as edge surface 424. The coating material that is used has a color that corresponds to or matches with a color of the eyewear frame. However, the edge surface 424 of the ophthalmic lens 430 appears even thicker than before, i.e. perceived thickness of the eyewear frame has increased, when the edge surface 424 is viewed through the ophthalmic lens. Such an appearance, whereby the eyewear frame is perceived to be excessively thick and bulky, is not acceptable to some wearers, as it may be deemed to be uncool or not fashionable.

In light of the above, there exists a need for improved methods to manufacture eyewear which address or at least alleviate one or more of the above-mentioned problems.

**Summary**

In a first aspect, a method of manufacturing an eyewear is provided. The method comprises providing an ophthalmic lens comprising a first optical surface, an opposing second optical surface, and an edge surface connecting the first optical surface and the second optical surface; determining one or more target colors relating to any one of a physical characteristic and a physical environment of a wearer of the eyewear; and disposing a first layer on the edge surface of the ophthalmic lens, wherein the first layer has a first color profile determined based on the one or more target colors. Other advantageous and non limiting features of the method of manufacturing an eyewear according to the invention are mentioned in claims 2 to 11.

In a second aspect, an eyewear comprising an ophthalmic lens is provided. The ophthalmic lens comprises a first optical surface, an opposing second optical surface and an edge surface connecting the first optical surface and the second optical surface, wherein the edge surface comprises a first layer disposed thereon, the first layer having a first color profile determined based on one or more target colors relating to any one of a physical characteristic and a physical environment of a wearer of the eyewear. Other advantageous and non limiting features of the eyewear according to the invention are mentioned in claims 13 to 15.

**Brief description of the drawings**

For a more complete understanding of the description provided herein and the advantages thereof, reference is now made to the brief descriptions below, taken in connection with the accompanying drawings and detailed description, wherein like reference numerals represent like parts.

**FIG. 1A** is a photograph showing front view of a user wearing an eyewear 100. A white ring 112 is shown. Also shown is a corresponding edge surface 122 of the ophthalmic lens 130, which was coated with a coating material to reduce visibility of a white ring that would otherwise be present. The color of the coating material was chosen to match the color of the eyewear frame 140.

**FIG. 1B** is a photograph showing side view of a user wearing an eyewear 100. A myopia ring 114 is shown. Also shown is a corresponding edge surface 124 of the ophthalmic lens 130, which was coated with a coating material to reduce visibility of a myopia ring that would otherwise be present. The color of the coating material was chosen to match the color of the eyewear frame 140. This, however, increased perceived thickness of the eyewear frame 140.

**FIG. 2A** is a schematic diagram showing an edge coating 202 disposed on an edge surface of an ophthalmic lens 230 according to an embodiment. The edge surface of the ophthalmic lens 230 is defined by the surface connecting the first optical surface 220 and the second optical surface 222. The first optical surface 220 and the second optical surface 222 may respectively be a concave (Cc) surface and a convex (Cx) surface of the ophthalmic lens 230. The edge surface of the ophthalmic lens 230 comprises a lens bevel 226 and a safety bevel 224. As depicted in the figure, there is no overflow on the first optical surface 220 and the second optical surface 222 of the ophthalmic lens 230.

**FIG. 2B** is a schematic diagram showing an edge coating 202 disposed on an edge surface of an ophthalmic lens 230 according to an embodiment. The edge surface of the ophthalmic lens 230 is defined by the surface connecting the first optical surface 220 and the second optical surface 222. The first optical surface 220 and the second optical surface 222 may respectively be a concave (Cc) surface and a convex (Cx) surface of the ophthalmic lens 230. The edge surface of the ophthalmic lens 230 comprises a lens bevel 226 and a safety bevel 224. As depicted in the figure, there is overflow in the form of excess coating material 204, 206 disposed respectively on the first optical surface 220 and the second optical surface 222 of the ophthalmic lens 230.

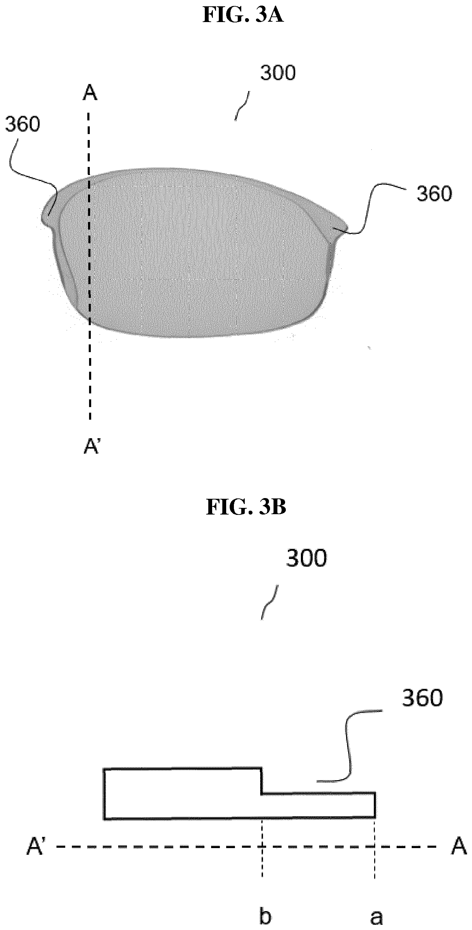

**FIG. 3A** is a photograph showing an ophthalmic lens 300. As depicted in the figure, the profile of the edge surface includes a step-back 360 along a perimeter portion of one or both of the first optical surface and the second optical surface.

**FIG. 3B** is a schematic diagram showing a cross-section of the ophthalmic lens 300 of **FIG. 3A** along line A-A'. The step-back 360 is shown as a "L" shape with reference to the edge surface and the optical surface of the ophthalmic lens 300.

**FIG. 4A** is a photograph showing side view of a user wearing an eyewear 400 comprising an eyewear frame 440 and an ophthalmic lens 430 of -6.00D. A myopia ring 414 is shown.

**FIG. 4B** is a photograph showing side view of a user wearing an eyewear 400 comprising an eyewear frame 440 and an ophthalmic lens 430 of -6.00D. An edge surface 424 of the ophthalmic lens 430 was coated with a coating material in an attempt to mask a myopia ring that would otherwise be present. The coating material that was used has a color that corresponded to or matched with a color of the eyewear frame 440. However, the edge surface 424 of the ophthalmic lens 430 which had the coating material disposed thereon made the eyewear frame 440 appeared even thicker than before, particularly when the wearer was viewed at certain angles to a viewer. Such an appearance is not acceptable to some wearers.

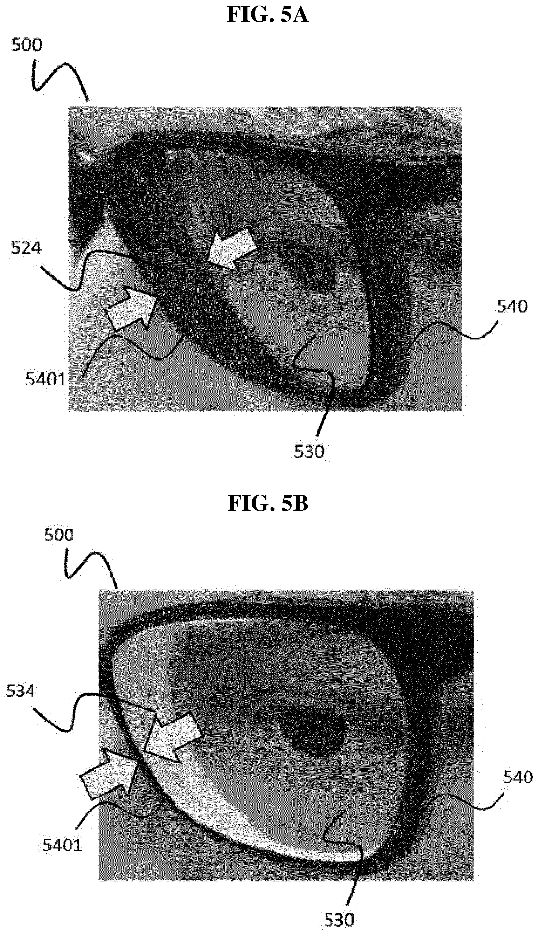

**FIG. 5A** is a photograph showing side view of the user wearing an eyewear 500 comprising an eyewear frame 540 and an ophthalmic lens 530 of -6.00D. A corresponding edge surface 524 of the ophthalmic lens 530 was coated with a coating material in an attempt to make the myopia ring less noticeable. The eyewear frame 540 was black in color. To match with the eyewear frame 540, the coating material was also black in color. The arrows in the figure indicate a combined thickness of the edge surface 524 and a thickness of the eyewear frame 5401 which was not covered by the edge surface 524. As can be seen, the color of the coating material, which had the same color as the eyewear frame 540, increased the perceived thickness of the eyewear frame 540 such that it appeared that the eyewear 500 was very thick and bulky.

**FIG. 5B** is a photograph showing side view of the user wearing an eyewear 500 comprising an eyewear frame 540 and an ophthalmic lens 530 of -6.00D. A corresponding edge surface 534 of the ophthalmic lens 530 was coated with a coating material. In the embodiment shown, a coating material having a color profile that was close to or matched with the skin tone color of the wearer was used. The arrows in the figure indicate a thickness of an eyewear frame portion 5401 which was not covered by the edge surface 534. As can be seen, the perceived thickness of the eyewear frame 540 at a region adjacent to the edge surface 534 and denoted as 5401 was much thinner, as compared to the perceived thickness shown in **FIG. 5A.** This may be achieved by the coating material covering the edge surface 534, such that a portion of the eyewear frame 540 which would otherwise be visible through the ophthalmic lens 530, was disguised. This alleviates problem of appearance of a thick frame accentuated by the black colored edge surface of **FIG. 5A.**

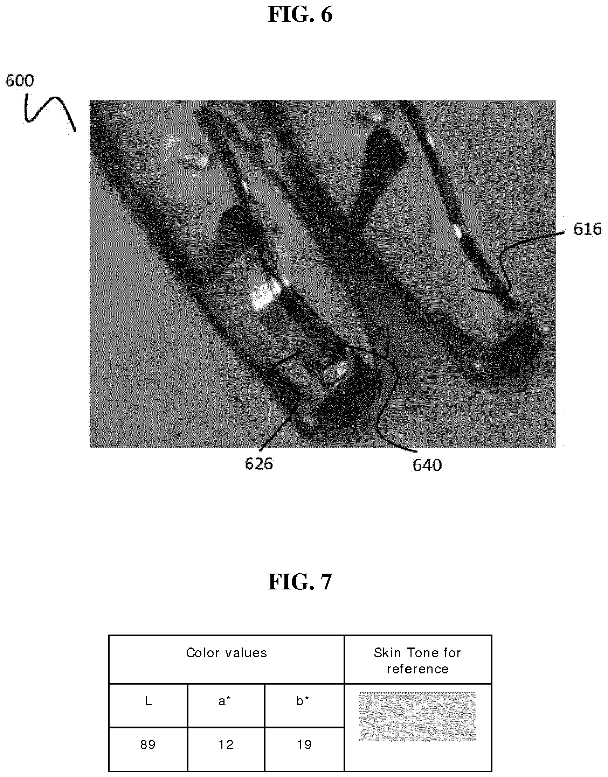

**FIG. 6** is a photograph showing two pieces of an eyewear 600. The edge surface 616 of an eyewear did not have a coating material disposed thereon. The edge surface 626 of the other eyewear had a coating material disposed thereon, and the second color profile of the coating material was chosen to match a color of the eyewear frame 640.

FIG. 7 is a table showing color values and skin tone for reference according to an embodiment.

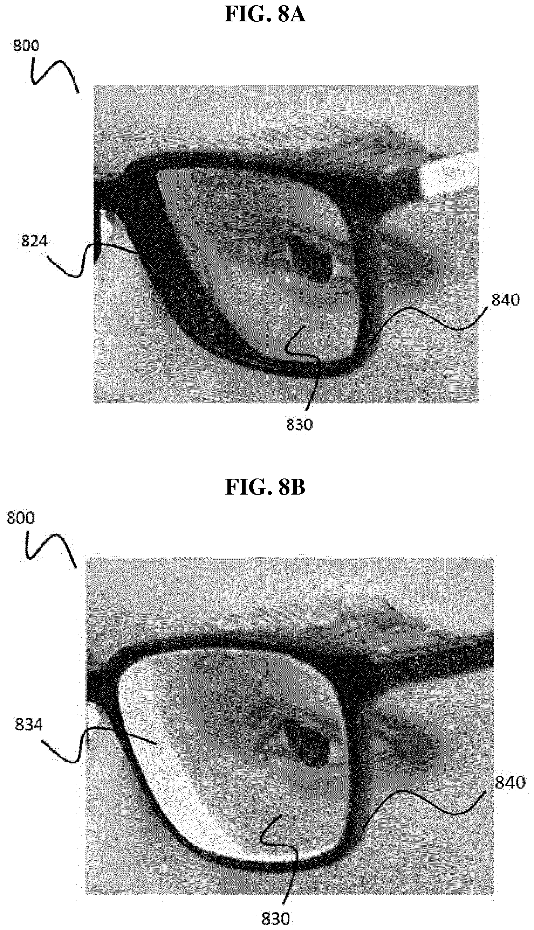

FIG. 8A is a photograph showing an eyewear 800. A corresponding edge surface 824 of the ophthalmic lens 830 was coated with a coating material in an attempt to make the myopia ring less noticeable. The eyewear frame 840 was black in color. To match with the eyewear frame 840, the coating material was also black in color. As can be seen, even though a myopia ring that may otherwise be present was masked, the color of the coating material increased the perceived thickness of the eyewear frame 840 such that it appeared that the eyewear 800 was very thick and bulky.

**FIG. 8B** is a photograph showing an eyewear 800. A corresponding edge surface 834 of the ophthalmic lens 830 was coated with a coating material. In the embodiment shown, a coating material having a color profile that was close to or matched with the skin tone color of the wearer was used. As can be seen, a myopia ring that may otherwise be present was masked. The perceived thickness of the eyewear frame 840, in particular at a region adjacent to the edge surface 834, appeared to be much thinner as compared to that shown in **FIG. 8A.** This may be achieved by the coating material covering an area of the edge surface 834, such that a portion of the eyewear frame 840 which would otherwise be visible through the ophthalmic lens 830, was disguised.

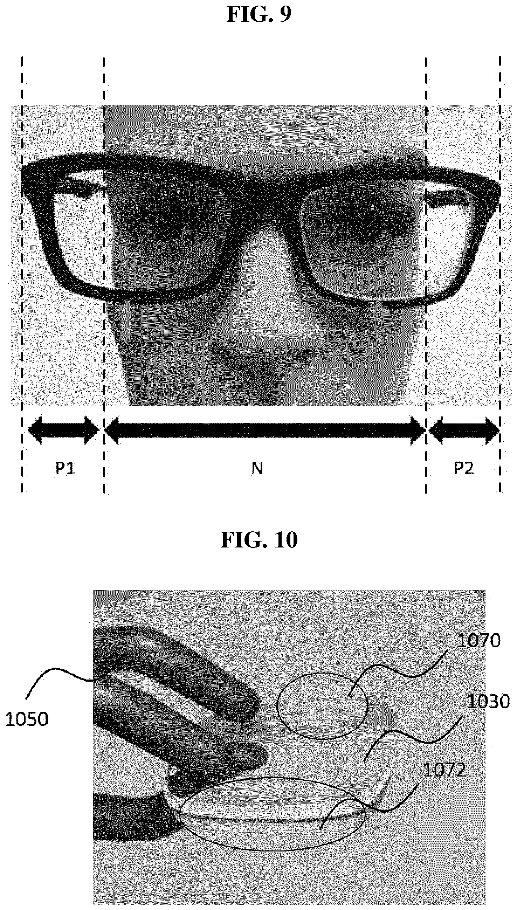

**FIG. 9** is a photograph illustrating definition of portion of edge surface proximal to the nasal side of the eyewear shown by "N" and portion of edge surface proximal to the temporal side of the eyewear shown by "P1" and "P2".

**FIG. 10** is a photograph showing color of (i) a first surface 1070 of an edge layer disposed on an edge surface of an ophthalmic lens 1030, as seen through the ophthalmic lens, and (ii) a second surface 1072 of the edge layer. The ophthalmic lens 1030 is being held by a model 1050. The area highlighted in circles were used for measurement and color comparison.

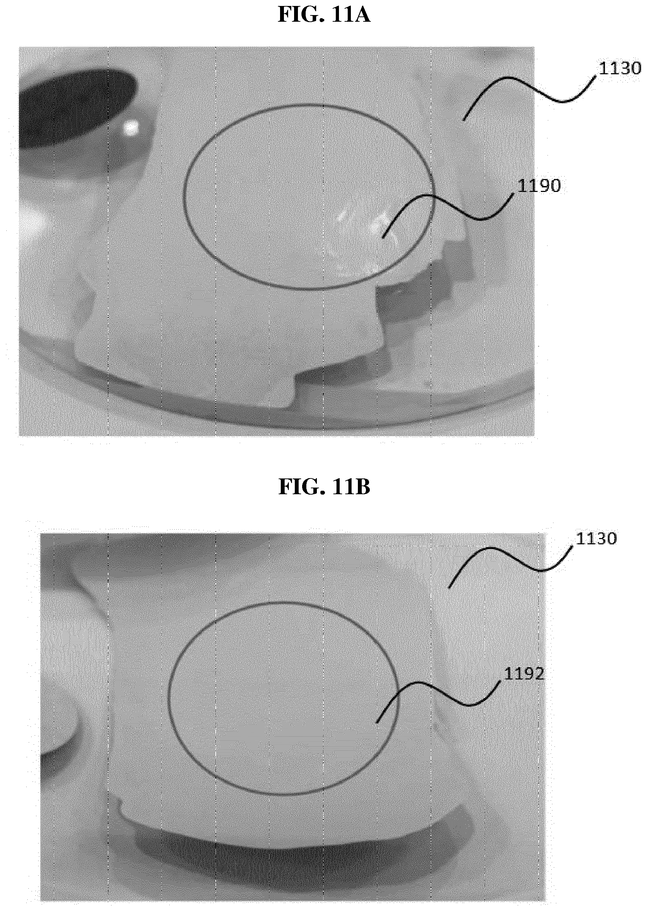

**FIG. 11A** is a photograph showing a piano lens 1130, and a surface 1190 on the plano lens 1130 where the coating material is applied. The images in **FIG. 11A** and **FIG. 11B** were captured on camera keeping the angle the same.

**FIG. 11B** is a photograph showing the reverse side of the piano lens 1130 in **FIG. 11A,** depicting back surface 1193 of the surface 1190 shown in **FIG. 11A** as viewed through the piano lens 1130. The images in **FIG. 11A** and **FIG. 11B** were captured on camera keeping the angle the same.

**Detailed description**

In the description which follows, the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention.

Various embodiments refer in a first aspect to a method of manufacturing an eyewear. The method comprises providing an ophthalmic lens comprising a first optical surface, an opposing second optical surface, and an edge surface connecting the first optical surface and the second optical surface; determining one or more target colors relating to any one of a physical characteristic and a physical environment of a wearer of the eyewear; and disposing a first layer on the edge surface of the ophthalmic lens, wherein the first layer has a first color profile determined based on the one or more target colors.

The method of manufacturing an eyewear according to embodiments disclosed herein is able to improve aesthetics by reducing a perceived thickness of an eyewear frame in an eyewear adorned by a wearer. Even though a coating material, which confers color to an edge surface of an ophthalmic lens, is used, the eyewear frame does not appear thick. This may be achieved by the coating material covering an area of the edge surface, wherein the coating material has a color profile which matches one or both of a physical characteristic and a physical environment of a wearer of the eyewear. In so doing, a portion of the eyewear frame, which would otherwise be visible through the ophthalmic lens, may be disguised or masked, thereby reducing perceived thickness of the eyewear frame. In embodiments wherein an eyewear frame is not comprised in the eyewear, one or more coloring materials may be applied to a perimeter portion

EP 3 730 995 A1

of one or both the first optical surface and the second optical surface so that the perimeter portion resembles an eyewear frame. In other words, one or more coloring materials may be painted onto the ophthalmic lens so as to resemble an eyewear frame. In so doing, weight of the eyewear may be reduced since an eyewear frame is not used, thereby providing greater comfort while still conferring desired appearance to a wearer.

As used herein, the term "eyewear" refers generally to items and accessories worn on or over the eyes, which may be for purposes of improving or enhancing visual acuity, for protecting against the environment, for fashion, or for adornment. Examples of eyewear may include eyeglasses, goggles, or other objects on or worn over the eyes, or head-mounted devices. Eyeglasses, also termed herein as glasses or spectacles, may include sunglasses, prescription glasses, prescription sunglasses, transitional glasses, reading glasses, safety glasses, novelty glasses, costume glasses, 3D glasses, fashion glasses, and the like.

The method disclosed herein comprises providing an ophthalmic lens comprising a first optical surface, an opposing second optical surface, and an edge surface connecting the first optical surface and the second optical surface.

The term "ophthalmic lens" refers to any type of lens intended to be supported by a wearer's face in the form of an eyewear, which may be for purposes of improving or enhancing visual acuity, for protecting against the environment, for fashion, or for adornment. Examples include non-corrective lenses, semi-finished lens blanks, and corrective lenses, such as progressive addition lenses, unifocal or multifocal lenses. The term may also include one or more of prescription, non-prescription, reflective, anti-reflective, magnifying, polarizing, filtering, anti-scratch, colored, tinted, clear, anti-fogging, ultraviolet (UV) light protected, or other lenses. Further examples of ophthalmic lens include electronic lens, virtual reality (VR) lens, and the like.

An ophthalmic lens is generally manufactured in accordance with wearer specifications from an ophthalmic lens blank such as a semi-finished lens blank. A semi-finished lens blank generally has two opposite surfaces at least one of which is unfinished. The unfinished surface of the lens blank may be machined according to the wearer's prescription to provide the required surface of the ophthalmic lens. An ophthalmic lens having finished back and front surfaces may be referred to as an uncut ophthalmic lens. In the case of an ophthalmic lens for the correction or improvement of eyesight, for example, the ophthalmic lens may be manufactured according to a wearer prescription corresponding to the visual requirements of that wearer. At least one of the surfaces of the ophthalmic lens may be processed to provide an ophthalmic lens according to the wearer prescription.

In embodiments in which the ophthalmic lens is supported by an eyewear frame, the shape and size of the eyewear frame supporting the ophthalmic lens may also be taken into account. For example, the contour of the uncut ophthalmic lens may be edged according to a shape of a spectacle frame on which the ophthalmic lens is to be mounted in order to obtain an edged or cut ophthalmic lens.

As mentioned above, an ophthalmic lens may be manufactured in accordance with wearer specifications and which may be processed to provide the ophthalmic lens with various functions. Accordingly, ophthalmic lens may have a complex structure resulting from interlayering of materials and/or a series of treatments to tailor the ophthalmic lens to specific user requirements. For example, the treatments may be carried out to reduce thickness and to render the ophthalmic lens lightweight, to improve on transparency, for durability, strength and protection, aesthetics etc. It follows that an ophthalmic lens may comprise one or more coatings disposed on a surface of a substrate functioning as an optical surface, such as an anti-breakage coating, an anti-scratch coating, an anti-reflection coating, a tint coating, a color coating, an anti-static coating, or an anti-smudge coating.

Accordingly, the term "optical surface" as used herein refers to surface of a substrate in the form of a bare ophthalmic lens without any coating disposed on the optical surface(s), such as an unfinished or untreated ophthalmic lens, as well as surface of a coating which may be designed to be temporarily or permanently disposed on the optical surface(s) of a bare ophthalmic lens. Examples of a coating that may be disposed on an ophthalmic lens have already been mentioned above, and may further include, but are not limited to, (1) topcoat, (2) anti-reflective (AR) coatings and asymmetrical mirrors, and/or (3) hardcoat (HC).

In various embodiments, the first optical surface and the second optical surface may independently be a substrate, a substrate having a hard coat, or a substrate having a hard multi-coat (HMC) coating, i.e. an antireflective (AR) coating, a hardcoat (HC), and a topcoat disposed thereon. In various embodiments, the first optical surface and the second optical surface may respectively be a concave (Cc) surface and a convex (Cx) surface of the ophthalmic lens.

The first optical surface and the second optical surface are connected by an edge surface. As used herein, the term "edge surface" refers to a lateral flank and/or external contour of an ophthalmic lens. For example, the edge surface may define a surface on the lateral flank and/or external contour of an ophthalmic lens upon which a coating material is to be disposed. The edge surface may include a lens bevel and a safety bevel. The term "lens bevel" refers generally to the edge of a lens shaped like a "V", and may help to secure the lens after it has been inserted in an eyewear frame. The term "safety bevel", on the other hand, refers to a flattening bevel ground on the external contour of the ophthalmic lens, which may be formed at an interface between the external contour and the optical faces of the ophthalmic lens, whereby the sharp edges have been removed for a safer lens. The lens bevel and the safety bevel may constitute a profile on the edge surface.

In some embodiments, the ophthalmic lens may further include a step-back on a perimeter portion of one or both of the first optical surface and the second optical surface abutting the edge surface. In such embodiments, the profile on the edge surface may include the step-back along with the lens bevel and the safety bevel. An example of a step-back is shown in **FIG. 3A** and **FIG. 3B**. As shown in the figures, the ophthalmic lens 300 includes a step-back 360 on an optical surface abutting the edge surface, which may be formed by removing a portion of a perimeter portion of the optical surface. Although the step-back 360 in **FIG. 3B** is shown as a "L" shape with reference to the edge surface and the optical surface of the ophthalmic lens 300, it may be of any other shapes such as a "C" shape, a staggered "L" shape, or an irregular shape, for example, with reference to the edge surface and the optical surface of the ophthalmic lens 300. The step-back portion may be used to retain the coating material with object of providing a desired colored contour on the ophthalmic lens.

The method of manufacturing an eyewear disclosed herein comprises disposing a first layer on the edge surface of the ophthalmic lens. The first layer may be in the form of a coating material, which may be disposed on the edge surface of the ophthalmic lens as an edge coating. The first layer may be introduced on the edge of an ophthalmic lens for various reasons.

For example, the first layer may form a coating effective to reduce a reflection caused by a profile of the edge surface. As mentioned above, an opaque coating may be deposited on the edge of an ophthalmic lens to reduce or to prevent myopia rings and white rings for aesthetic purposes. Myopia rings may be caused by total internal reflection when light travels from the lens edge to the air gap between the lens and the frame, and may be generated due to reflection of light from one or both of the optical surfaces and/or the edge surface. This is particularly true at the lens edges, which, oftentimes, have been shaped in order to be fitted into the frame. White rings, on the other hand, may be caused by a thickness of the ophthalmic lens, and may be observed visually from the front of the lens. By reducing or eliminating a reflection caused by a profile of the edge surface, visibility of the myopia rings or white rings otherwise appearing along the perimeter of the ophthalmic lens face may be reduced or eliminated.

As mentioned above, the edge surface of the ophthalmic lens may be multi-faceted or comprise various shape profiles depending on specific requirements for the finished ophthalmic lens. The edge surface of an ophthalmic lens may, for example, comprise a lens bevel, a safety bevel, and/or a step-back. The first layer may accordingly be disposed on an entire portion of the edge surface, or on selected portions of the edge surface, such as on one or more facets of a multi-faceted edge surface, the lens bevel, the safety bevel, and/or the step-back. Different coating materials may be disposed on selected portions of the edge surface. In various embodiments, one or more further layers are disposed on the edge of an ophthalmic lens. In some embodiments, two or more layers are present, and each of the two or more layers may comprise the same or a different coating material.

The first layer disposed on the edge surface of the ophthalmic lens has a first color profile relating to any one of a physical characteristic and a physical environment of a wearer of the eyewear. To configure the first color profile of the first layer, methods disclosed herein may comprise determining one or more target colors relating to any one of a physical characteristic and a physical environment of a wearer of the eyewear. The first color profile of the first layer may accordingly be configured based on the one or more target colors before the first layer is disposed on the edge surface of the ophthalmic lens.

Accordingly, methods disclosed herein comprise determining one or more target colors relating to any one of a physical characteristic and a physical environment of a wearer of the eyewear, and disposing a first layer on the edge surface of the ophthalmic lens, wherein the first layer has a first color profile determined based on the one or more target colors.

As used herein, the term "color" refers to an individual's perception of the spectral composition of visible light coming from a portion of an object. Color characteristics include hue, luminosity, and saturation. Hue refers to the attribute of a color which allows it to be classified as a given color. Luminosity, or value of the color, refers to the degree of lightness (paleness) or darkness in a color. Saturation, or vividness of the color, refers to the intensity of the color. A given color may be varied by changing the saturation and luminosity. For example, saturation may be varied by adding a neutral color, black, white, or gray. Luminosity may be varied by adding a brightener to a given color.

Determining the one or more target colors may comprise determining one or more colors of: a facial skin of the wearer, a hair of the wearer, an attire of the wearer, a vehicle of the wearer, and a decoration, furniture, wall, or fitting of a home, a school, or an office of the wearer.

In this regard, determining one or more target colors relating to a physical characteristic or a wearer of the eyewear may comprise determining one or more colors of: a facial skin of the wearer or a hair of the wearer. The hair of the wearer may also refer to the facial hair or eyebrows or eyelashes of the wearer. The facial skin color of the wearer may include a natural skin color of the wearer, or color of make-up applied on the face of the wearer. In determining the target color, a colorimetric measurement may be taken of the facial skin tone of the wearer for setting as a target color. In embodiments wherein more than one target color is desired, a further colorimetric measurement may be taken of the hair of the wearer for setting as a further target color.

Likewise, determining one or more target colors relating to a physical environment of a wearer of the eyewear may comprise determining one or more colors of: an attire of the wearer, a vehicle of the wearer, and a decoration, furniture, wall, or fitting of a home, a school, or an office of the wearer. For example, a wearer may be positioned in his or her most common environment such as desk in his office or at home, and a colorimetric measurement may be made of the background, which may in turn be used for setting as a target color.

The first layer has a first color profile determined based on the one or more target colors. By the term "color profile" used herein, it refers to color characteristics of the first layer, which may be the same or different throughout the first layer. For example, the first color profile may be the same throughout the first layer. In some cases, the first color profile may be in the form of a color gradient. In various embodiments, one side of the first layer is in direct contact with the ophthalmic lens. Accordingly, the first color profile of the first layer corresponds to that of the side of the first layer that is in direct contact with the ophthalmic lens, and as seen through the ophthalmic lens.

In various embodiments, the first color profile includes a first color at a portion of the edge surface proximal to the nasal side of the eyewear which matches with a target color relating to a physical characteristic of the wearer, and a second color at a portion of the edge surface proximal to the temporal side of the eyewear which matches with a target color relating to a physical environment of the wearer. By the phrase "proximal to the nasal side of the eyewear", it refers to a portion of the edge surface which overlaps or substantially overlaps with the face of the wearer when viewed from the front of the wearer, such as that shown in FIG. 9 as "N". By the phrase "proximal to the temporal side of the eyewear", it refers to a portion of the edge surface which does not overlap with the face of the wearer when viewed from the front of the wearer, such as that shown in FIG. 9 as "P1" and "P2". The wearer and the viewer may be directly facing each other in determining suitable "N", "P1" and "P2" values. Nevertheless, suitable "N", "P1" and "P2" values may also be determined with objective to optimize reduction in perceived thickness of the eyewear frame, by having the viewer positioned at an angle to the wearer.

Suitable colorants may be used or prescribed based on the one or more target colors. Advantageously, having such a first color profile allows myopia rings and/or white rings to be masked while also reducing a perceived thickness of the eyewear frame, since the color at the respective edge surfaces matches with or blends in with their respective background relating to a physical characteristic of the wearer or a physical environment of the wearer.

The term "match" as used herein is intended to describe the way or degree to which two visual characteristics fit together. Colors, for example, may be matched if they have a hue, luminosity or saturation that fit within limits described below.

In various embodiments, colors which have about the same hue, saturation and luminosity are considered matched. By the term "about", it refers to a range of values that is within $\pm$ 10 % of a specified value, such as within $\pm$ 8 %, within $\pm$ 6 %, within $\pm$ 5 %, within $\pm$ 4 %, within $\pm$ 3 %, within $\pm$ 2 %, or within $\pm$ 1 % of a specified value.

In various embodiments, colors are considered matched if their difference is not perceptible by human eyes. This may be quantified using a parameter termed Delta E ($\Delta$E), which is a metric established to understand how the human eye perceives color difference. The term "delta" is derived from mathematics, meaning change in a variable or function.

In this regard, CIELAB is a conventional color model used to describe colors visible to the human eye. The three axes used with the CIELAB color scale may be L*, a*, and b* value of a given color. The CIELAB color scale is an approximate uniform color scale, wherein the differences between points plotted in the color space correspond to visual differences between the colors. When a color is defined according to the CIELAB color scale, L* represents lightness (0 = black, 100 = white), a* and b* independently represent a two color axis, a* being a red/green axis (+a = red, -a = green), while b* being a yellow/blue axis (+b = yellow, -b = blue). The maximum for L* is 100, representing a perfect reflecting diffuser, and the minimum for L* is zero, representing black. a* and b* axes, on the other hand, have no specific numerical limits.

Based on the L*, a*, and b* values for a first color (i.e. $L_i$, $a_i$, $b_i$,) and a second color (i.e. $L_2$, $a_2$, $b_2$), the difference between the colors (i.e. $\Delta$E) may be calculated using the formula:

$\Delta E = \sqrt{(AL^{*2} + Aa^{*2} + Ab^{*2})}$, wherein $AL^* = L_i - L_2$; $Aa^* = a_i - a_2$, and $Ab^* = b_i - b_2$.

The values of L*, a*, and b* may be determined using any color measurement equipment, software, or method known to a person skilled in the art. For example, L*, a*, and b* may be determined using a computer equipped with a software that can provide the L*, a*, and b* of a selected area.

With the above in mind, possible values of Delta E and how they relate to human perception are summarized in **TABLE 1.**

**TABLE 1**

| Delta E | Perception |
|---|---|
| $\leq$ 1.0 | Not perceptible by human eyes |
| 1 - 2 | Perceptible through close observation |

(continued)

| Delta E | Perception |
|---------|------------|
| 2 - 10 | Perceptible at a glance |

Referring to **TABLE 1,** Delta E according to embodiments disclosed herein may be one or less than one for colors having differences which are not perceptible by human eyes, in considering whether two colors are matched. Value of Delta E may in turn be calculated from the respective $L^*$, $a^*$ and $b^*$ values, as mentioned above. At the same $L^*$ value, difference between the $a^*$ and $b^*$ values of the colors should be less than 0.8, such as less than 0.7 or less than 0.6, and more preferably less than 0.5.

In various embodiments, the first color profile has high lightness. This may be in the form of $L^*$ having a value of at least 75, such as at least 80, at least 85, at least 90, or at least 95.

As mentioned above, CIELAB is a conventional color model used to describe colors visible to the human eye, and the values of $L^*$, $a^*$, and $b^*$ used in the model may be determined using any color measurement equipment, software, or method known to a person skilled in the art. Prior to disposing a coating material to form the first layer on the edge surface of the ophthalmic lens, the coating material may be subjected to a color measurement equipment, for example, for adjusting its color to match with one or more target colors. A difference in Delta E value, termed herein as an "offset", may be present between the color of the coating material before and after it is disposed on the edge surface, given that the color of the coating material after it is disposed on the edge surface is the color as seen through the ophthalmic lens. This may be due to reflection, particularly in the case where the coating material has a light color as they are less absorbing.

It has been found by the present inventors that such an offset may depend on the power of the ophthalmic lens, while being independent of the color value. In other words, offset for a given power of an ophthalmic lens may remain constant regardless of the color. In various embodiments, the offset may be in the range of about 2 to about 8. For example, offset in the case of piano lenses were found to be about 2, whereas for ophthalmic lenses having a power of -6.00 was found to be about 5. Accordingly, prior to disposing the first layer on the edge surface of the ophthalmic lens, an adjustment to the color of the coating material that is used to form the first layer may be made to account for Delta E.

In addition to, or apart from the above, the high lightness may be expressed as a value of 8 and above in Munsell color system. According to the Munsell color system, value refers to the attribute of visual sensation which can express the magnitude of luminous reflectance (reflectance with respect to lightness) of an object surface. The value is expressed in a Munsell color system in equally spaced relation, such that black which can completely absorb light is 0 and white which can completely reflect light is 10.

In various embodiments, the first color profile comprises or consists of one or more colors which match with the one or more target colors. The first color profile of the first layer may comprise one single color or two or more colors, depending on the number of target colors being determined. For example, when only one target color is determined, the first color profile of the first layer may consist of one single color. As a further example, when two or more target colors are determined, two or more colors may be present in the first color profile of the first layer. In such cases, methods disclosed herein may further comprise selecting one or more colors from the two or more target colors by the wearer, for inclusion in the first color profile of the first layer.

Accordingly, the first layer may have one or more colors that can be user specified. For example, in embodiments whereby more than one color may be deemed to correspond to a target color relating to a physical environment of a wearer of the eyewear, choice of the first color profile of the first layer may be made by the wearer.

It follows from the above discussion that the first layer may be opaque or almost opaque, which allows the first layer to absorb at least part of, if not all, of the light arriving from the lens, which may result in further attenuation of the light. It is also possible for the first layer may be a translucent colored coating, which allows some light to pass through thereby camouflaging or disguising the myopia rings or white rings.

Advantageously, in various embodiments, the first layer is an opaque or almost opaque layer to allow masking of at least a portion of the eyewear frame, when viewed through the ophthalmic lens, such as that shown in FIG. 5B. In various embodiments, the first layer has a transmittance of less than 3 %, such as less than 2 %, less than 1 %, less than 0.5 %, or less than 3% and up to 0.2 %, or a transmittance in the range of 0.2 % to 3%, 1 % to 3%, 2 % to 3%, or 0.5 % to 1.5%. The term "transmittance" as used herein refers to intensity of radiation transmitted through a material over that of the incident radiation, and which is expressed as a percentage. As mentioned above, the first layer may be opaque or almost opaque, which allows the first layer to absorb at least part of, if not all, of the light arriving from the lens, so as to result in further attenuation of the light. The transmittance may be measured across the visible light region of the electromagnetic spectrum, corresponding to a wavelength range of about 350 nm to about 750 nm.

The opacity of the coating material that is being used to form the first layer may be imparted from an opacity agent contained in the coating material.

As used herein, the term "opacity agent" refers to a substance or an additive added to a material so as to reduce transparency or light transmittance through the material. In this regard, the material may function as a matrix for holding the opacity agent, and the opacity agent may be dispersed in the matrix. The opacity agent may include, but is not limited to, pigments, titanium dioxide, calcium oxide, beryllium oxide, cerium oxide, barium sulphate, and/or a combination thereof. In various embodiments, the opacity agent comprises or consists of one or more pigments having a color that matches with a physical characteristic or a physical environment of a wearer of the eyewear. In some embodiments, a red pigment and a yellowish-green pigment may be mixed to derive a pigment having a skin tone color.

The opacity agent may be dispersed in a matrix material. The term "matrix material" as used herein refers to any support, which may be liquid, semi-solid, or solid, for carrying the opacity agent and/or other components of the coating material. In various embodiments, the opacity agent is dispersed at least substantially homogeneously in the matrix material.

The matrix material may include, but is not limited to, a UV-curable composition such as acrylate, epoxy, unsaturated polymer, silane, styrene, vinyl chloride, vinyl acetate, a thermal-curable composition such as polyurethane (of which nitrocellulose modified polyurethane is one example), polyurea, epoxy, polyester, polyamide, polyimide, polyether, alkyd, polycarbonate, or a combination thereof. The various combinations of matrix material and opacity agent disclosed herein are examples of materials effective to reduce a reflection caused by a profile of the edge surface. In specific embodiments, the matrix material is a cross-linked polyurethane.

Weight ratio of the matrix material to the opacity agent may be in the range of about 1:0.05 to about 1:3, such as about 1:0.1 to about 1:3, about 1:0.5 to about 1:3, about 1:1 to about 1:3, about 1:1.5 to about 1:3, about 1:2 to about 1:3, about 1:2.5 to about 1:3, about 1:0.05 to about 1:2.5, about 1:0.05 to about 1:2, about 1:0.05 to about 1:1.5, about 1:0.05 to about 1:1, about 1:0.05 to about 1:0.5, about 1:0.05 to about 1:0.1, about 1:0.5 to about 1:2.5, or about 1:1 to about 1:2.

Disposing the first layer may generally be carried out using any suitable deposition or coating method, such as a conformal deposition method. For example, disposing the first layer may be carried out by a method selected from the group consisting of vacuum deposition, vapor deposition, sol-gel deposition, spin coating, dip coating, spray coating, flow coating, film laminating, sticker coating, roller coating, brush coating, painting, sputtering, casting, Langmuir-Blodgett deposition, laser printing, inkjet printing, screen printing, pad printing, and a combination thereof.

Disposing the first layer on the edge surface of the ophthalmic lens may further comprise removably attaching the first layer to the edge surface.

By the term "removably attach", it means that the first layer may be temporarily attached to the edge surface, and which may be removed using a simple tool in some embodiments, or which does not require use of a tool to attach or remove in others. For example, the first layer may be peeled off without the use of a tool. Other examples may include, but are not limited to, use of a weak adhesive to removably attach the first layer on the edge surface. Advantageously, this provides interchangeability of the first layer accordingly to the preference of the wearer.

A method according to embodiments disclosed herein may further comprise the step of disposing a second layer on the first layer, wherein at least a portion of the second layer has a second color profile designed to resemble an eyewear frame or for decoration purpose.

As mentioned above, the method of manufacturing an eyewear according to embodiments disclosed herein is able to improve aesthetics by reducing a perceived thickness of an eyewear frame in an eyewear adorned by a wearer. By matching the first color profile of the first layer to one or more target colors relating to one or both a physical characteristic and a physical environment of a wearer of the eyewear, for example, thickness of an eyewear frame perceived by a viewer may be reduced, due to masking of at least a portion of the eyewear frame by the coating material when seen through the ophthalmic lens. On the other hand, an opposing side of the first layer which is not in direct contact with the ophthalmic lens, may still look aesthetically non-pleasing. A reason may be due to the opposing side of the first layer having a color that does not match with a physical characteristic and/or a physical environment of the wearer, when the first layer is being viewed from its opposing side.

Accordingly, by disposing a second layer on the first layer, the second color profile of at least a portion of the second layer may be designed to resemble an eyewear frame. In so doing, weight of the eyewear may be reduced since an eyewear frame is not used, thereby providing greater comfort while still conferring desired appearance to a wearer. Methods described above for disposing the first layer may similarly be used for disposing the second layer.

In some embodiments, the method disclosed herein further comprises providing an eyewear frame and mounting the ophthalmic lens into the frame, wherein the second color profile comprises or consists of one or more colors which match with a color of the eyewear frame. Advantageously, this may improve aesthetics of the eyewear frame while not increasing weight of the eyewear since lesser material of the eyewear frame may be used to provide the same or similar appearance.

In some embodiments, the second color profile of at least a portion of the second layer may be designed for decoration purpose. For example, the second color profile may contain a pattern such as graphics, dots or lines, or a gradient of colors along the length of the second layer. The second color profile may alternatively be chosen to contrast with the color of the eyewear frame, thereby giving the wearer an additional fashion choice. In this regard, the coating material may function as a material effective to provide an aesthetic effect to the eyewear.

In various embodiments, the method disclosed herein further comprises providing an eyewear frame and mounting the ophthalmic lens into the frame. The method may further comprise applying one or more coloring material to a perimeter portion of one or both the first optical surface and the second optical surface, so that the perimeter portion resembles an eyewear frame.

As used herein, the term "perimeter portion" refers to an area on an optical surface which is offset from and proximate to an edge of the optical surface. For example, the perimeter portion may be offset from an edge of the optical surface, such that it covers 20 % or less of the entire surface area of the optical surface, such as 15 % or less, 10 % or less, 5 % or less, 2 % or less of the entire surface area of the optical surface.

In some embodiments, the one or more coloring material is applied at an entire perimeter portion of one or both of the first optical surface and the second optical surface abutting the edge surface. This allows an edge surface of the ophthalmic lens to be coated around its entire perimeter. The perimeter portion may be offset equally from an edge of the optical surface. In some embodiments, the perimeter portion may be offset by a differing distance from an edge of the optical surface along the perimeter.

Prior to applying the one or more color material, the method disclosed herein may further comprise applying a temporary protective material to one or both the first optical surface and the second optical surface to define the respective perimeter portion.

As used herein, the term "temporary protective material" refers to a substance or compound which is applied to an ophthalmic lens for masking or shielding purposes. By the term "a temporary protective material", it means that at least one temporary protective material may be disposed on the optical surfaces, such as one, two, three, or a plurality of the temporary protective material may be present. The temporary protective material may eventually be removed to reveal the underlying finished optical surfaces. In other words, the temporary protective material may not be present in a finished ophthalmic lens. Accordingly, the temporary protective material may be a material that does not form strong bonds with the ophthalmic lens, thereby rendering it possible for the temporary protective material to be removed with relative ease from the ophthalmic lens. The temporary protective material may also comprise or be formed of a material which presents minimal impact on the properties of the optical surface(s) after its removal.

In various embodiments, the temporary protective material is selected from the group consisting of a metallic fluoride, a metallic oxide, natural polymers, block copolymer, and a combination thereof.

Examples of metallic fluorides include, but are not limited to, magnesium fluoride ($MgF_2$), lanthanum fluoride ($LaF_3$), aluminum fluoride ($AlF_3$), cerium fluoride ($CeF_3$), or a combination thereof.

Examples of metallic oxides include, but are not limited to, titania ($TiO_2$), alumina ($Al_2O_3$), zirconia ($ZrO_2$), praseodymium oxide ($Pr_2O_3$), or a combination thereof.

Examples of natural polymers include, but are not limited to, cellulose derivatives such as methyl cellulose, carboxymethyl cellulose, hydroxyethyl cellulose and ethylhydroxy cellulose; natural rubbers such as gum arabic and tragacanth gum; proteins such as glue, gelatin, casein and albumin; glucosides such as saponin; and alginic acid, and alginic acid derivatives such as propyleneglycol alginate, triethanolamine alginate, and ammonium alginate, or a combination thereof.

Examples of block copolymers include, but are not limited to, poly(styrene-Acrylate), polystyrene-polyether, polystyrene-polycaprolactone, polyacrylate-polycaprolactone, polyether-polyacrylate, polyvinyl-polyacrylate, polyvinyl-polycaprolactone, polyvinyl-polystyrene, a copolymer thereof, or a combination thereof.

In various embodiments, the temporary protective material comprises one or more metallic fluorides selected from the group consisting of magnesium fluoride ($MgF_2$), lanthanum fluoride ($LaF_3$), aluminum fluoride ($AlF_3$), and cerium fluoride ($CeF_3$), or one or more metallic oxides selected from the group consisting of titania ($TiO_2$), alumina ($Al_2O_3$), zirconia ($ZrO_2$), or praseodymium oxide ($Pr_2O_3$).

In some embodiments, the temporary protective material comprises a mixture of MgO and $MgF_2$.

In some embodiments, the temporary protective material is a peelable coating, meaning that it may be a layer that may be manually removed from the optical surface(s) by an operator without use of tools. Examples of material which may be used to form the peelable coating may include a polyvinyl acetal such as polyvinyl butyral (PVB) and polyvinyl formal (PVF), and which may be provided in a sol-gel/UV formulation.

Various embodiments refer in a second aspect to an eyewear comprising an ophthalmic lens comprising a first optical surface, an opposing second optical surface and an edge surface connecting the first optical surface and the second optical surface. The edge surface comprises a first layer disposed thereon, the first layer having a first color profile determined based on one or more target colors relating to any one of a physical characteristic and a physical environment of a wearer of the eyewear.

In various embodiments, the edge surface further comprises a second layer disposed on the first layer and at least a portion of the second layer has a second color profile designed to resemble an eyewear frame or for decoration purpose.

Examples of suitable material that may be used to form the first layer and the second layer have already been described above.

In various embodiments, the ophthalmic lens is a cylindrical lens or an ophthalmic lens for wearers with higher myopia (beyond ± 2.00D).

In some embodiments, one or more coloring material are applied to a perimeter portion of one or both the first optical surface and the second optical surface or the edge surface of the ophthalmic lens, or both the perimeter portion and the edge surface, so that the surface having the one or more coloring material applied thereon, resembles an eyewear frame. In various embodiments, the one or more coloring material are applied to a perimeter portion of one or both the first optical surface and the second optical surface only. As mentioned above, the perimeter portion may be offset from an edge of the optical surface, such that it covers 20 % or less of the entire surface area of the optical surface, such as 15 % or less, 10 % or less, 5 % or less, 2 % or less of the entire surface area of the optical surface.

In various embodiments, one or more coloring material comprises a photochromic material or a thermochromic material. These materials are able to introduce color changing capability on the edge of lenses with external stimuli such as ultraviolet radiation or thermal energy. This feature would be most beneficial for rimless frames, where in the switch on / switch off would result in transformation of 'no rim' to 'colored rim', or from one color to other color rim frame.

Photochromism may be described as a persistent, reversible color and/or opacity change of a material upon exposure to ultraviolet radiation. Examples of suitable photochromic material may include silver halides such as microcrystalline silver halides, and organic photochromic molecules such as oxazines and naphthopyrans. Other examples include, but are not limited to, spiropyran, azobenzenes, stilbenes, fulgides, azulenes, spiroperimidines, and/or hexaarylbiimidazole.

Thermochromism, on the other hand, may be described as a persistent, reversible color and/or opacity change of a material upon application of thermal energy to the material. Examples of suitable thermochromic material may include, but are not limited to, liquid crystals, conjugated oligomers, leuco dyes, and/or vanadium oxide.

The invention has been described broadly and generically herein. Each of the narrower species and subgeneric groupings falling within the generic disclosure also form part of the invention. This includes the generic description of the invention with a proviso or negative limitation removing any subject matter from the genus, regardless of whether or not the excised material is specifically recited herein.

Other embodiments are within the following claims and non- limiting examples. In addition, where features or aspects of the invention are described in terms of Markush groups, those skilled in the art will recognize that the invention is also thereby described in terms of any individual member or subgroup of members of the Markush group.

## Experimental section

Myopia rings and white rings of an ophthalmic lens in an eyewear may be masked using methods such as deposition of a colored coating on the edge surface of an ophthalmic lens via marker pens. The marker pens are usually available in a small collection of assorted colors, and a color is chosen to be the same as or similar to a color of the eyewear frame. This has, however, resulted in problems associated with undesirable increase in perceived thickness of the eyewear frame.

To alleviate the above-mentioned problems, various embodiments disclosed herein relate to a method of manufacturing an eyewear including determination and provision of specific colors of edge surface of an ophthalmic lens suitable for the wearers such that the edge surface blends in with the background color of the wearer, and/or is distinctly different from the color of the eyewear frame.

Four examples are described here:

    A) edge color that is matching with the wearer's skin tone
    B) edge color that is matching with the user most common environment
    C) edge color that is of high lightness, L*
    D) Two-/ multiple-layered edge color

Various embodiments disclosed herein describe a method to prescribe the color of colored edge lenses in a way such that while myopia rings and white rings are removed through the introduction of the colored edges, perceived frame thickness is not compromised. This will lead to better overall aesthetics of the eyewear especially for high myopes.

Various embodiments disclosed herein may be classified under the selection of colored edge color for deposition on lens edge. By the term "lens edge", it embodies the lateral flank and/or the external contour of the lens.

Various embodiments disclosed herein may be used to recommend the appropriate edge color for consumers who wishes to acquire colored edge lenses. It may potentially be an element of the in-store experience for consumer seeking such products.

## A) Edge color that is matching with the wearer's skin tone

In this embodiment, the edge color is proposed such that it matches the skin tone of the wearer (the background). As shown in **FIG. 5A** and **FIG. 5B,** the perceived frame thickness induced by a black colored edge on a black frame is greatly reduced when a skin tone colored edge is used.

The color prescription in this case may comprise the following steps:

i) colorimetric measurement of the skin tone of the wearer;
ii) selection and prescription of colorants that is most matching with the skin tone in the form of coating formulation or an additional and detached interface;
iii) deposition of color in the form of coating formulation or an additional and detached interface on lens edge.

## B) Edge color that is matching with the user most common environment

In this embodiment, the edge color is proposed such that it matches the environmental background color of the wearer.

The color prescription in this case may comprise the following steps:

i) position the user in his most common environment (e.g. desk in his office) and make a colorimetric measurement of the background. Similarly, the colorimetric data of the wearer's background may be captured via an image (e.g. photograph, video, live recording...);
ii) selection and prescription of colorants that is most matching with the skin tone in the form of coating formulation or an additional and detached interface;
iii) deposition of color in the form of coating formulation or an additional and detached interface on lens edge.

## C) Edge color that is of high lightness

In this embodiment, edge color of high lightness is proposed such that it is distinctly different from the frame colors which are predominantly of dark colors. In preferred embodiments, edge color with Munsell Value of 8 and above are recommended.

## D) Two-/ multiple-layer colored edge

In another embodiment, a two- or multiple-layer edge color is proposed. The inner layer may have a color that is proposed in (A), (B) or (C) mentioned above, and on top of it, an external layer with another color (e.g. to match the frame color), or a color selected from (A), (B) or (C), which is not identical to the color of the inner layer. In FIG. 6, the external layer denoted by 626 was shown to match the frame color.

Skin-tone prototypes with robust mechanical and chemical-resistant characteristics have been demonstrated in the experiments carried out using substrate having a refractive index of 1.6.

**Skin Tone Target:** One of the skin tone target was chosen for experimentation. The tone was defined by measuring L, a* & b* values using spectrophotometer. The values are shown in **FIG. 7.**

**Ink composition:** Ink was formulated using $TiO_2$ as white base and color tone was imparted by mixing yellow (eg. Hostaperm Yellow H4G) and red pigment (eg. Hostaperm Red D3G). In order to have excellent dispersion of pigments into the system, Solsperse 36600 hyperdispersant was chosen as surfactant. The whole system was stabilised using Vinyl Chloride-co-vinyl acetate and BYK 431.

For illustration, **TABLE 2** provides an example of an ink formulation used to achieve a target skin tone disclosed herein.

**TABLE 2:**

| Sr.No. | Ink component | Weight (%) |
|---|---|---|
| 1 | Methiopropamine (MPA) | 18.7 |
| 2 | Solsperse 36600 (surfactant of polymeric anionic wetting and dispersing additive, 50 % in aromatic solvents) | 2.6 |
| 3 | Titanium dioxide ($TiO_2$) (white base) | 65.7 |
| 4 | Hostaperm Red D3G (brilliant red pigment) | 0.5 |

(continued)

| Sr.No. | Ink component | Weight (%) |
|--------|---------------|------------|
| 5 | Hostaperm Yellow H4G (greenish yellow pigment with formula $C_{18}H_{15}N_5O_5$) | 2.9 |
| 6 | Vinyl chloride-co-vinyl acetate (stabilizer) | 9.3 |
| 7 | BYK 431 (stabilizer of liquid rheology control additive, solution of a high molecular urea modified non polar polyamide) | 0.3 |
| | Total | 100 |

The above prepared ink formulation was mixed with polymer matrix (eg.. PU system) to produce prototypes.

For illustration purpose, **TABLE 3** below is an example of coating formulation.

**TABLE 3:**

| Sr.No | Formulation Component | Weight (%) |
|-------|-----------------------|------------|
| 1 | PU matrix | 46.5 |
| 2 | Ink | 46.5 |
| 3 | Hardener (Hexamethylene isocyanate trimer) | 6.2 |
| 4 | Catalyst (Dibutyl tin dilaurate) | 0.8 |
| | Total | 100 |

The edge of lenses were coated with this formulation and dried for 5 to 6 hrs. The color value of the coating were measured and tabulated below in **TABLE 4.**

**TABLE 4:**

| Color values | L | a* | b* |
|--------------|------|------|------|
| **Target tone** | 89 | 12 | 19 |
| **Coating tone** | 88.4 | 12.8 | 19.9 |

**FIG. 8A** and **FIG. 8B** provide comparison of black edge and skin tone edge lenses. It is evident that the skin tone edge lens reduce the 'tunneling effect', as it is matching with skin color of wearer, which otherwise is prominent with black color edge lens. It also improves aesthetic of lens as well as provides fashion element.

**Evaluation tests on prototypes:** From the evaluation point of view, following test have been conducted.

**Mounting chipping test:** Lens was mounted and unmounted in frames for 3 times to check if the coating was chipped. Observation of CE finishing during each mounting and unmounting process done. No chipping was noticed.

**Solvent resistance test:** Results are shown in **TABLE 5.**

**TABLE 5:**

| Solvents | IPA | Essiclean | Acetone |
|----------|------|-----------|---------|
| Observation | Good | Good | Fair |

Context - **Offset color values**

Under ideal circumstances, which means that there is 100 % transmission and completely no reflection at edges, the color applied on the edge surface of the lens should appear the same as when it is seen through the lens. However, in reality, the color produced on edge surface may not appear to be exactly the same as when seen through the lens. This is shown in **FIG. 10.** The difference in color could be mainly due to reflection. This is especially true for a light color (light skin tone) because they are less absorbing.

In view of the above, it may be important to measure the difference, defined herein as an offset, between the target color produced and the final color on the edge surface of the lens. The offset may vary to some extent depending on the power of the lens. However it should stay constant for the same power.

To demonstrate the above, the following experiments were carried out to measure the offset values on piano and semi-finshed lenses.

Experiment 1: On high power lenses (-6.00)

The high power lenses (-6.00) used for coating is in **FIG. 10.** The area highlighted in circles were used for measurement and color comparison. Three readings were taken for each surface and RGB values were measured. The average values were also calculated as shown below in **TABLE 6.**

**TABLE 6:**

| Measurement | Front surface | | | | Through the lens | | | |
|---|---|---|---|---|---|---|---|---|
| Color values | 1 | 2 | 3 | Average | 1 | 2 | 3 | Average |
| R | 255 | 253 | 255 | **254** | 246 | 247 | 251 | **248** |
| G | 207 | 210 | 210 | **204** | 191 | 194 | 196 | **193** |
| B | 190 | 197 | 196 | **194** | 178 | 182 | 181 | **180** |

These values were converted into L, a* & b* as shown below by using online software color Peaker online tool, and values summarized in **TABLE 7.**

**TABLE 7:**

| Front surface conversion | | Through the lens conversion | |
|---|---|---|---|
| RGB | L, a* b* | RGB | L, a* b* |
| **254 (R)** | 86 (L) | **248 (R)** | 82 (L) |
| **204 (G)** | 16 (a*) | **193 (G)** | 17 (a*) |
| **194 (B)** | 11 (b*) | **180 (B)** | 14 (b*) |

When ΔE is calculated using following formula,

$$\Delta E_{ab}^* = \sqrt{(L_2^* - L_1^*)^2 + (a_2^* - a_1^*)^2 + (b_2^* - b_1^*)^2}$$

ΔE = 5. (Lens power is - 6.00)

Experiment 2: On piano lenses

The random skin tone color applied on piano lens (Tv = 92.1 % and Haze = 0.4) to measure the offset value using piano lens. This time the color applied on the surface to get the possibly lowest offset value.

The area highlighted in circles have been used for measurement. Three readings were taken for each surface.

The comparison is shown in **FIG. 11A** and **FIG. 11B.** Results showed image A (front surface) is much brighter than image B (Back side). RGB values were measured. The average values were also calculated as shown below in **TABLE 8.**

**TABLE 8:**

| Measurement | Front surface | | | | Through the lens from back side | | | |
|---|---|---|---|---|---|---|---|---|
| Color values | 1 | 2 | 3 | Average | 1 | 2 | 3 | Average |
| R | 220 | 223 | 223 | **222** | 218 | 213 | 218 | **216** |
| G | 185 | 188 | 186 | **186** | 185 | 180 | 185 | **183** |
| B | 166 | 169 | 168 | **167** | 170 | 165 | 168 | **167** |

These values were converted into L, a* & b* as shown below by using online software color Peaker online tool, and values summarized in **TABLE 9.**

**TABLE 9:**

| Front surface conversion | | Through the lens conversion | |
|---|---|---|---|
| RGB | L, a* b* | RGB | L, a* b* |
| **222 (R)** | 78.10 (L) | **216 (R)** | 76.9 (L) |
| **186 (G)** | 10.1 (a*) | **183 (G)** | 9.4 (a*) |
| **167 (B)** | 14.1 (b*) | **167 (B)** | 12.3 (b*) |

When ΔE is calculated using following formula,

$$\Delta E_{ab}^* = \sqrt{(L_2^* - L_1^*)^2 + (a_2^* - a_1^*)^2 + (b_2^* - b_1^*)^2}$$

Δ E = 2. (Lens power is 0.00)

**Conclusion:**

From the above data, it is clear that the offset for piano lenses is around 2 (between 1 and 3, preferably 2) whereas for -6.00 power, it is around 5 (between 4 and 6, preferably 5). This ΔE could go up to 8.00 as power can vary up to 10.00 diopter.
It clearly indicates that offset values changes with power, which is a consideration when setting the target color. The target color of the ink formulation was adjusted so that once the formulation was coated onto the edge surface, it will compensate the effect of reflection off the edge surface, so as to achieve delta E of less than 2.
Although representative processes and articles have been described in detail herein, those skilled in the art will recognize that various substitutions and modifications may be made without departing from the scope of what is described and defined by the appended claims.

**Claims**

1. A method of manufacturing an eyewear, the method comprising
   providing an ophthalmic lens comprising a first optical surface, an opposing second optical surface, and an edge surface connecting the first optical surface and the second optical surface;
   determining one or more target colors relating to any one of a physical characteristic and a physical environment of a wearer of the eyewear; and
   disposing a first layer on the edge surface of the ophthalmic lens, wherein the first layer has a first color profile determined based on the one or more target colors.

2. The method according to claim 1, wherein determining the one or more target colors comprises determining one or more colors of: a facial skin of the wearer, a hair of the wearer, an attire of the wearer, a vehicle of the wearer, and a decoration, furniture, wall, or fitting of a home, a school, or an office of the wearer.

3. The method according to claim 1 or 2, wherein the first color profile comprises or consists of one or more colors which match with the one or more target colors.

4. The method according to any one of claims 1 to 3, wherein the first color profile includes a first color at a portion of the edge surface proximal to the nasal side of the eyewear which matches with a target color relating to a physical characteristic of the wearer, and a second color at a portion of the edge surface proximal to the temporal side of the eyewear which matches with a target color relating to a physical environment of the wearer.

5. The method according to any one of claims 1 to 4, wherein the first color profile has high lightness.

6. The method according to any one of claims 1 to 5, wherein disposing the first layer on the edge surface of the ophthalmic lens further comprises removably attaching the first layer to the edge surface.

7. The method according to any one of claims 1 to 6, further comprising the step of disposing a second layer on the first layer, wherein at least a portion of the second layer has a second color profile designed to resemble an eyewear frame or for decoration purpose.

8. The method according to claim 7, further comprising providing an eyewear frame and mounting the ophthalmic lens into the frame, wherein the second color profile comprises or consists of one or more colors which match with a color of the eyewear frame.

9. The method according to any one of claims 1 to 7, further comprising providing an eyewear frame and mounting the ophthalmic lens into the frame.

10. The method according to any one of claims 1 to 7, further comprising applying one or more coloring material to a perimeter portion of one or both the first optical surface and the second optical surface, so that the perimeter portion resembles an eyewear frame.

11. The method according to claim 10, further comprising applying a temporary protective material to one or both the first optical surface and the second optical surface to define the respective perimeter portion prior to applying the one or more coloring material.

12. An eyewear comprising an ophthalmic lens comprising a first optical surface, an opposing second optical surface and an edge surface connecting the first optical surface and the second optical surface, wherein the edge surface comprises a first layer disposed thereon, the first layer having a first color profile determined based on one or more target colors relating to any one of a physical characteristic and a physical environment of a wearer of the eyewear.

13. The eyewear of claim 12, wherein the edge surface further comprises a second layer disposed on the first layer and at least a portion of the second layer has a second color profile designed to resemble an eyewear frame or for decoration purpose.

14. The eyewear of claim 12 or 13, wherein one or more coloring material are applied to a perimeter portion of one or both the first optical surface and the second optical surface, or the edge surface, or both the perimeter portion and the edge surface, so that the surface having the one or more coloring material applied thereon resembles an eyewear frame.

15. The eyewear of claim 14, wherein one or more coloring material comprises a photochromic material or a thermo-chromic material.

**FIG. 1A**

**FIG. 1B**

**FIG. 2A**

**FIG. 2B**

## FIG. 3A

300

360

360

A

A'

## FIG. 3B

300

360

A' — — — — — — — — — — — — — — — A

b          a

## FIG. 4A

400

414

440

430

## FIG. 4B

400

424

440

430

# FIG. 5A

# FIG. 5B

## FIG. 6

600

616

626    640

## FIG. 7

| Color values | | | Skin Tone for reference |
|---|---|---|---|
| L | a* | b* | |
| 89 | 12 | 19 | |

## FIG. 8A

800

824

840

830

## FIG. 8B

800

834

840

830

## FIG. 9

P1    N    P2

## FIG. 10

1050

1070

1030

1072

## FIG. 11A

## FIG. 11B

Europäisches
Patentamt

European
Patent Office

Office européen
des brevets

# EUROPEAN SEARCH REPORT

**Application Number**

EP 19 30 5536

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/008847 A1 (AYOUB ABBY [US]) 24 January 2002 (2002-01-24) | 1-3,5-15 | INV. G02C1/00 B29D11/00 G02B1/10 G02B27/00 |
| Y | * figures 1,2a&b3 * | 11 | |
| A | * paragraphs [0017], [0021] - [0023], [0029], [0031] - [0033] * | 4 | |
| | ----- | | |
| X | GB 07033 A A.D. 1912 (MOSCHOU XENOPHON PAPPA) 1 August 1912 (1912-08-01) | 1-3,5, 7-9,12, 13,15 | |
| A | * page 1, lines 5-10, 12-16, 29-30 * | 4,6,10, 11,14 | |
| | ----- | | |
| X | FR 2 828 564 A1 (BATAILLARD OLIVIER [FR]) 14 February 2003 (2003-02-14) | 1,3,7-9, 12,13,15 | |
| Y | * figure 1 * | 11 | |
| A | * page 1, lines 16-16, 26 * | 2,4-6, 10,14 | |
| | ----- | | |

**TECHNICAL FIELDS SEARCHED (IPC)**

G02C
B29D
G02B

The present search report has been drawn up for all claims

| Place of search | Date of completion of the search | Examiner |
|---|---|---|
| Munich | 22 October 2019 | Gentile, Mathieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 30 5536

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2019

| Patent document cited in search report | Publication date | Patent family member(s) | Publication date |
|---|---|---|---|
| US 2002008847 A1 | 24-01-2002 | JP 2004526204 A<br>US 2002008847 A1<br>WO 02088829 A1 | 26-08-2004<br>24-01-2002<br>07-11-2002 |
| GB 191207033 A | 01-08-1912 | NONE | |
| FR 2828564 A1 | 14-02-2003 | NONE | |

EPO FORM P0459

For more details about this annex : see Official Journal of the European Patent Office, No. 12/82